(19)

**Europäisches Patentamt**
**European Patent Office**
**Office européen des brevets**

(11) **EP 3 793 094 A1**

(12) **EUROPEAN PATENT APPLICATION**

(43) Date of publication:
**17.03.2021 Bulletin 2021/11**

(51) Int Cl.:
**H04B 7/024** (2017.01)   **H04B 7/06** (2006.01)

(21) Application number: **20182637.7**

(22) Date of filing: **24.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.09.2009 US 24533909 P**

(62) Document number(s) of the earlier application(s) in accordance with Art. 76 EPC:
**10818207.2 / 2 481 234**

(71) Applicant: **BlackBerry Limited**
**Waterloo, Ontario N2K 0A7 (CA)**

(72) Inventors:
• **MADDAH-ALI, Mohammad**
**Waterloo, Ontario N2K 0A7 (CA)**
• **MOTAHARI, Seyed Abolfazl**
**Waterloo, Ontario N2K 0A7 (CA)**
• **KHANDANI, Amir**
**Waterloo, Ontario N2K DA7 (CA)**

• **BALIGH, Mohammadhadi**
**Ottawa, Ontario K1Z 8M5 (CA)**
• **JIA, Ming**
**Ottawa, Ontario K2A 0B3 (CA)**
• **MA, Jianglei**
**Kanata, Ontario K2M 2W5 (CA)**
• **ZHU, Peiying**
**Kanata, Ontario K2M 2L4 (CA)**
• **TONG, Wen**
**Ottawa, Ontario K2C 4A7 (CA)**

(74) Representative: **Hanna Moore + Curley**
**Garryard House**
**25-26 Earlsfort Terrace**
**Dublin 2, D02 PX51 (IE)**

Remarks:
•This application was filed on 26-06-2020 as a divisional application to the application mentioned under INID code 62.
•Claims filed after the date of receipt of the divisional application (Rule 68(4) EPC)

(54) **X-MIMO SYSTEMS WITH MULTI-TRANSMITTERS AND MULTI- RECEIVERS**

(57)    A method and apparatus for transmitting and receiving a wireless transmission of a plurality of data streams in a wireless communication system having a plurality of nodes is disclosed. Each node has multiple antennas. The method involves receiving first and second data streams from respective first and second nodes at a receiver node, causing the receiver node to generate a receive filter for decoding each of the received data streams, and causing the receiver node to transmit receive filter information for each of the first and second data streams, the receive filter information facilitating precoding of the first and second data streams for simultaneous transmission within a common frequency band to the receiver node.

FIG. 13

Printed by Jouve, 75001 PARIS (FR)

**Description**

**CROSS-REFERENCES TO RELATED APPLICATIONS**

This application claims the benefit of U.S. provisional patent application 61/245,339 filed on September 24, 2009, which is hereby incorporated by reference in its entirety.

This application is a continuation-in-part of the non-provisional application (serial number to be determined) resulting from conversion under 37 C.F.R. § 1.53(c)(3) of U.S. provisional patent application 61/245,339 filed on September 24, 2009, which claims the benefit of U.S. provisional patent application 61/100,118 filed on September 25, 2008.

**BACKGROUND OF THE INVENTION**

**1. Field of Invention**

This invention relates generally to wireless communications between a base station and a mobile station and more particularly to communications between multiple transmitters and multiple receivers, each having multiple-input-multiple-output (MIMO) antennas.

**2. Description of Related Art**

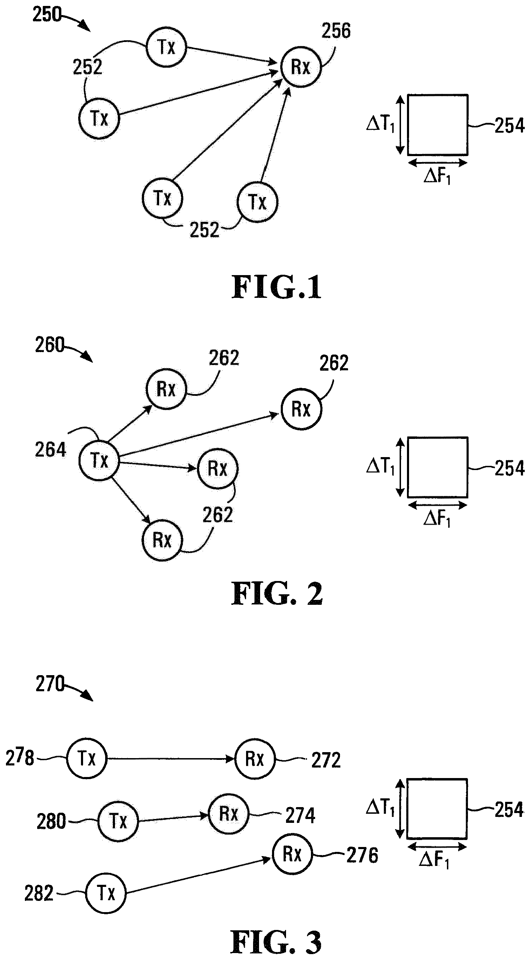

Conventionally, in wireless systems, one of three configurations has generally been employed. Referring to Figure 1, in one configuration shown at 250, transmitters 252 send data 254 to only one receiver 256 (for example uplink channel or multi-access channel). Referring to Figure 2, in the configuration shown at 260 receivers 262 receive data 254 only from one transmitter 264 (for example downlink channel or broadcast channel). Referring to Figure 3, in the configuration shown at 270, each receiver 272, 274, or 276 receives data 254 from a respective intended transmitter 278, 280, or 282 (for example interference channels). An interference channel is generally configured such that the channel is, or appears to be, interference free for each of the receivers 272, 274, or 276, even though transmissions take place at the same time $\Delta T_1$ and at a common transmission frequency $\Delta F_1$.

In point-to-point wireless communication systems using multiple antennas (i.e. multiple-input-multiple-output or MIMO systems) there is only one transmitter and one receiver, each of which may include multiple antennas and associated transmit and receive circuitry. In closed loop MIMO operation, the transmitter selects precoding of data based on the channel, which requires channel knowledge at the transmitter. In point-to-point systems, the maximum number of streams is min(nTx,nRx). In the point-to-multipoint communications systems shown in Figure 1 and 2, under closed loop MIMO operation the transmitter selects a precoding based on the compound channel with the goal of minimizing interference among different receivers. This scheme requires channel knowledge at the transmitter, and results in a maximum total number of streams of min (nTx,$\sum$nRx), where nTx is the number of transmit antennas and nRx is the number of receive antennas.

In closed loop network MIMO operation of a point-to-multipoint system, the transmitters communicate over a backbone network and exchange data and/or channel state information (CSI). The maximum total number of streams for network MIMO is min($\sum$nTx, $\sum$nRx). Using an additional backbone system to connect transmitters or receivers enables implementation of advanced transmit precoding schemes such as dirty paper precoding, for example. While such schemes generally make more efficient use of available bandwidth, there is an additional hardware cost associated with the required data exchange between transmitters and there is also an associated increase in system overhead.

Other approaches to making more efficient use of available bandwidth include configuring more transmit and/or receive antennas for a given number of data streams, which also increases hardware cost.

There remains a need for wireless system configurations and methods that facilitate efficient usage of available bandwidth and/or system hardware and other resources.

**SUMMARY OF THE INVENTION**

In accordance with one aspect of the invention there is provided a method for receiving a wireless transmission of a plurality of data streams in a wireless communication system having a plurality of nodes, each node having multiple antennas. The method involves receiving first and second data streams from respective first and second nodes at a receiver node, causing the receiver node to generate a receive filter for decoding each of the received data streams, and causing the receiver node to transmit receive filter information for each of the first and second data streams, the receive filter information facilitating precoding of the first and second data streams for simultaneous transmission within a common frequency band to the receiver node.

Causing the receiver node to generate the receive filter may involve causing the receiver node to perform channel estimation using first and second pilot signals associated with the respective first and second data streams, comparing the channel estimate for the respective first and second data streams to a plurality of predetermined channel estimates stored on the receiver node to determine a best match between the channel estimate and one of the plurality of predetermined channel estimates for each the channel estimate, and for each of the first and second data streams, transmitting a channel estimate identifier identifying the best match channel estimate.

Causing the receiver node to generate the receive filter may involve using a zero-forcing algorithm to generate the filter.

Causing the receiver node to generate the receive filter may involve causing the receiver node to generate a receive filter for decoding each of the received data streams in the absence of information associated with data streams transmitted to other receiver nodes in the communication system.

The receiver node may be a first receiver node and may further involve receiving third and fourth data streams from respective first and second nodes at a second receiver node, causing the second receiver node to generate a receive filter for decoding each of the received data streams, and causing the second receiver node to transmit receive filter information for each of the third and fourth data streams, the receive filter information facilitating precoding of the third and fourth data streams for simultaneous transmission within a common frequency band to the second receiver node.

Receiving the first and second data streams may involve receiving data within a common frequency band including a plurality of sub-band frequencies.

In accordance with another aspect of the invention there is provided a method for transmitting a plurality of data streams in a wireless communication system having a plurality of nodes, each node having multiple antennas. The method involves causing first and second nodes in the wireless communication system to transmit respective first and second data streams to a receiver node, receiving receive filter information for each of the first and second data streams from the receiver node, and precoding the respective first and second data streams for simultaneous transmission within a common frequency band to the receiver node.

Causing the first and second nodes to transmit the respective first and second data streams may involve causing first and second transmitter nodes to transmit the respective first and second data streams.

The precoding may involve receiving a first channel estimate identifier associated with the first data stream at the first transmitter node and locating a corresponding first predetermined channel estimate stored on the first transmitter node and using the first predetermined channel response to perform the precoding of the first data stream, and receiving a second channel estimate identifier associated with the second data stream at the second transmitter node and locating a corresponding second predetermined channel estimate stored on the second transmitter node and using the second predetermined channel response to perform the precoding of the second data stream.

Performing the precoding of the first data stream and performing the precoding of the second data stream may involve independently precoding each of the respective first and second data streams in the absence of information associated with the other data stream.

Causing the first and second nodes to transmit the respective first and second data streams may involve causing first and second relay nodes to transmit the respective first and second data streams.

Causing the first and second relay nodes to transmit the respective first and second data streams may involve causing at least one transmitter node to transmit the first and second data streams to the first and second relay nodes for relaying to the receiver node.

Causing the at least one transmitter node to transmit the first and second data streams may involve causing a first transmitter node to transmit the first data stream to the first relay node and causing a second transmitter node to transmit the second data stream to the second relay node.

The precoding may involve precoding the respective first and second data streams for simultaneous transmission within a common frequency band including a plurality of sub-band frequencies.

In accordance with another aspect of the invention there is provided a receiver node apparatus for receiving a wireless transmission of a plurality of data streams in a wireless communication system having a plurality of nodes, each node having multiple antennas. The apparatus includes a receiver for receiving first and second data streams from respective first and second nodes at a receiver node, a processor operably configured to generate a receive filter for decoding each of the received data streams, and a transmitter operably configured to transmit receive filter information for each of the first and second data streams, the receive filter information facilitating precoding of the first and second data streams for simultaneous transmission within a common frequency band to the receiver node.

The processor may be operably configured to cause the receiver node to perform channel estimation using pilot signals associated with the respective first and second data streams, compare the channel estimate for the first and second data streams to a plurality of predetermined channel estimates stored on the receiver node to determine a best match between the channel estimate and one of the plurality of predetermined channel estimates for each the channel estimate, and the transmitter may be operably configured to transmit a channel estimate identifier identifying the best match channel estimate for each of the first and second data streams.

The processor may be operably configured to generate the receive filter using a zero-forcing algorithm.

The processor may be operably configured to generate the receive filter in the absence of information associated with data streams transmitted to other receiver nodes in the communication system.

The receiver may be operably configured to receive data within a common frequency band including a plurality of sub-band frequencies.

In accordance with another aspect of the invention there is provided a wireless communication system for transmitting a plurality of data streams. The system includes first and second nodes operably configured to transmit respective first and second data streams, a receiver node operably configured to receive the first and second data streams, the receiver node being further configured to generate a receive filter for decoding each of the received data streams and to transmit receive filter information for each of the first and second data streams. The system also includes at least one transmitter node operably configured to receive the respective receive filter information for each of the first and second data streams from the receiver node and to precode the respective first and second data streams for simultaneous transmission within a common frequency band to the receiver node.

Each of the first and second nodes may include a relay node operably configured to receive the respective first and second data streams from the at least one transmitter node and to relay the data streams to the receiver node.

Other aspects and features of the present invention will become apparent to those ordinarily skilled in the art upon review of the following description of specific embodiments of the invention in conjunction with the accompanying figures.

**BRIEF DESCRIPTION OF THE DRAWINGS**

In drawings which illustrate embodiments of the invention,

Figure 1     is a schematic representation of an uplink channel wireless system configuration;
Figure 2     is a schematic representation of a downlink channel wireless system configuration;
Figure 3     is a schematic representation of an interference channel wireless system configuration;
Figure 4     is a block diagram of a generic cellular communication system in which aspects of the present invention may be implemented;
Figure 5     is a block diagram of a base station depicted in Figure 4;
Figure 6     is a block diagram of a wireless station depicted in Figure 4;
Figure 7     is a block diagram of a relay station depicted in Figure 4;
Figure 8     is a block diagram of a logical breakdown of an OFDM transmitter of the base station shown in Figure 5;
Figure 9     is a block diagram of a logical breakdown of an OFDM receiver of the wireless station shown in Figure 6;
Figure 10    is a graphical representation of an exemplary frequency spectrum transmitted by the base station shown in Figure 5;
Figure 11    is a Single Carrier Frequency-Division Multiple Access (SC-FDMA) transmitter and receiver in accordance with an alternative embodiment of the invention;
Figure 12    is a schematic representation of an interference channel wireless system configuration in accordance with an embodiment of the invention;
Figure 13    is a block diagram of an X-MIMO communications system;
Figure 14    is a block diagram a communications system in which zero-forcing (ZF) linear pre-preprocessing and post-processing is implemented;
Figure 15    is a block diagram of a system configuration using a pair of relays in a downlink transmission;
Figure 16    is a block diagram of a system configuration using a pair of relays in an uplink transmission; and
Figure 17    is a block diagram of a system configuration using a pair of relays in an interference channel transmission.

**DETAILED DESCRIPTION**

Wireless System Overview

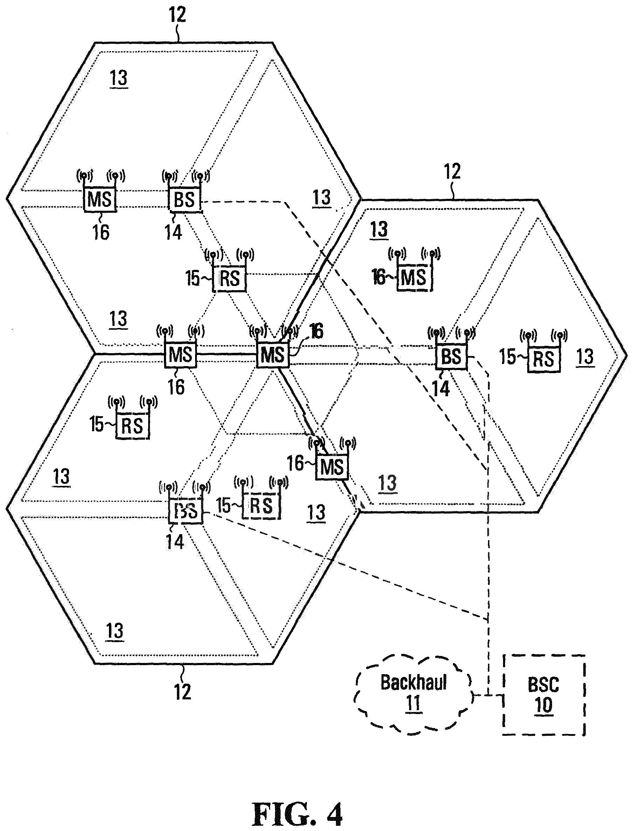

Referring to the drawings, Figure 4 shows a base station controller (BSC) 10, which controls wireless communications within multiple cells 12, which cells are served by corresponding base stations (BS) 14. In some configurations, each cell is further divided into multiple sectors 13 or zones (not shown). In general, each base station 14 facilitates communications using Orthogonal Frequency-Division Multiplexing (OFDM) digital modulation scheme with mobile stations (MS) and/or wireless stations 16, which are within the cell 12 associated with the corresponding base station 14.

Movement of the mobile stations 16 in relation to the base stations 14 results in significant fluctuation in channel conditions. As illustrated, the base stations 14 and the mobile stations 16 may include multiple antennas to provide spatial diversity for communications. In some configurations, relay stations 15 may assist in communications between the base stations 14 and the mobile stations 16. The mobile stations 16 can be handed off from any of the cells 12, the sectors 13, the zones (not shown), the base stations 14 or the relay stations 15, to another one of the cells 12, the sectors 13, the zones (not shown), the base stations 14 or the relay stations 15. In some configurations, the base stations 14 communicate with each other and with another network (such as a core network or the internet, both not shown) over a backhaul network 11. In some configurations, the base station controller 10 is not needed.

Base Station

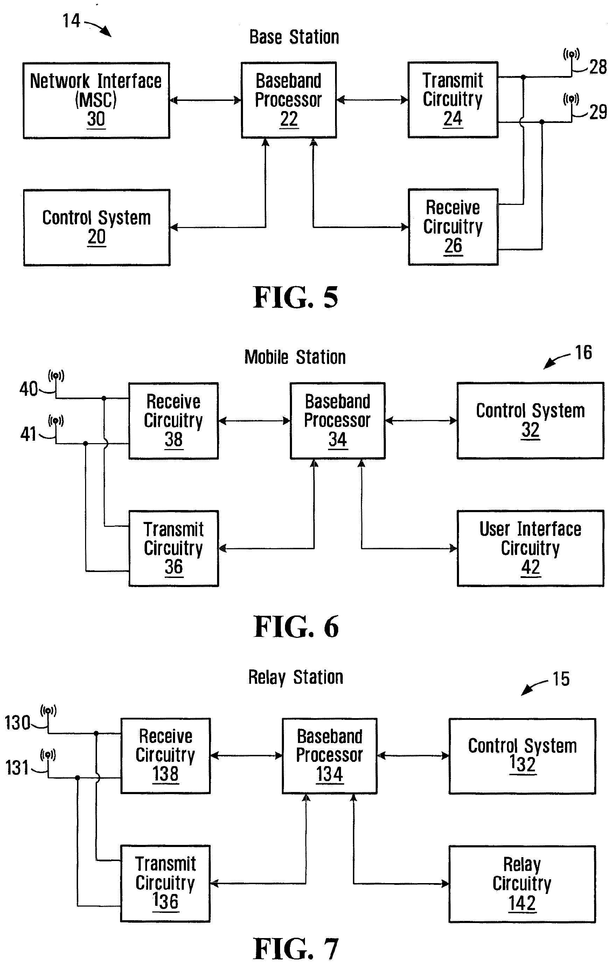

With reference to Figure 5, an example of a base station 14 is illustrated. The base station 14 generally includes a control system 20, a baseband processor 22, transmit circuitry 24, receive circuitry 26, multiple transmit antennas 28 and 29, and a network interface 30. The receive circuitry 26 receives radio frequency signals bearing information from one or more remote transmitters provided by the mobile stations 16 (illustrated in Figure 6) and the relay stations 15 (illustrated in Figure 7). A low noise amplifier and a filter (not shown) may cooperate to amplify and remove broadband interference from the received signal for processing. Downconversion and digitization circuitry (not shown) will then downconvert the filtered, received signal to an intermediate or baseband frequency signal, which is then digitized into one or more digital streams.

The baseband processor 22 processes the digitized streams to extract the information or data bits conveyed in the received signal. This processing typically comprises demodulation, decoding, and error correction operations. As such, the baseband processor 22 is generally implemented in one or more digital signal processors (DSPs) or application-specific integrated circuits (ASICs). The information is then sent across a wireless network via the network interface 30 or transmitted to another one of the mobile stations 16 serviced by the base station 14, either directly or with the assistance of one of the relay stations 15.

To perform transmitting functions, the baseband processor 22 receives digitized data, which may represent voice, data, or control information, from the network interface 30 under the control of the control system 20, and produces encoded data for transmission. The encoded data is output to the transmit circuitry 24, where it is modulated by one or more carrier signals having a desired transmit frequency or frequencies. A power amplifier (not shown) will amplify the modulated carrier signals to a level appropriate for transmission, and deliver the modulated carrier signals to the transmit antennas 28 and 29 through a matching network (not shown). Modulation and processing details are described in greater detail below.

Mobile Station

With reference to Figure 6, an example of a mobile station 16 is illustrated. Similarly to the base stations 14, the mobile station 16 includes a control system 32, a baseband processor 34, transmit circuitry 36, receive circuitry 38, multiple receive antennas 40 and 41, and user interface circuitry 42. The receive circuitry 38 receives radio frequency signals bearing information from one or more of the base stations 14 and the relay stations 15. A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams.

The baseband processor 34 processes the digitized streams to extract information or data bits conveyed in the signal. This processing typically comprises demodulation, decoding, and error correction operations. The baseband processor 34 is generally implemented in one or more digital signal processors (DSPs) and application specific integrated circuits (ASICs).

For transmission, the baseband processor 34 receives digitized data, which may represent voice, video, data, or control information, from the control system 32, which it encodes for transmission. The encoded data is output to the transmit circuitry 36, where it is used by a modulator to modulate one or more carrier signals at a desired transmit frequency or frequencies. A power amplifier (not shown) amplifies the modulated carrier signals to a level appropriate for transmission, and delivers the modulated carrier signal to each of the receive antennas 40 and 41 through a matching network (not shown). Various modulation and processing techniques available to those skilled in the art may be used for signal transmission between the mobile stations 16 and the base stations 14, either directly or via the relay stations 15.

OFDM Modulation

In OFDM modulation, the transmission band is divided into multiple, orthogonal carrier waves. Each carrier wave is modulated according to the digital data to be transmitted. Because OFDM divides the transmission band into multiple carriers, the bandwidth per carrier decreases and the modulation time per carrier increases. Since the multiple carriers are transmitted in parallel, the transmission rate for the digital data, or symbols, on any given carrier is lower than when a single carrier is used.

OFDM modulation includes the use of an Inverse Fast Fourier Transform (IFFT) on the information to be transmitted. For demodulation, a Fast Fourier Transform (FFT) is performed on the received signal to recover the transmitted information. In practice, the IFFT and FFT are provided by digital signal processing involving an Inverse Discrete Fourier Transform (IDFT) and Discrete Fourier Transform (DFT), respectively. Accordingly, a characterizing feature of OFDM modulation is that orthogonal carrier waves are generated for multiple bands within a transmission channel. The modulated signals are digital signals having a relatively low transmission rate and capable of staying within their respective bands. The individual carrier waves are not modulated directly by the digital signals. Instead, all carrier waves are modulated at once by IFFT processing.

In operation, OFDM is preferably used for at least downlink transmission from the base stations 14 to the mobile stations 16. Each of the base stations 14 is equipped with "n" transmit antennas (n ≥ 1), and each of the mobile stations 16 is equipped with "m" receive antennas (m ≥ 1). Notably, the respective antennas can be used for reception and transmission using appropriate duplexers or switches and are so labeled only for clarity.

When the relay stations 15 are used, OFDM is preferably used for downlink transmission from the base stations 14 to the relay stations and from the relay stations to the mobile stations 16.

Relay Station

With reference to Figure 7, an exemplary relay station 15 is illustrated. Similarly to the base stations 14, and the mobile stations 16, the relay station 15 includes a control system 132, a baseband processor 134, transmit circuitry 136, receive circuitry 138, antennas 130 and 131, and relay circuitry 142. The relay circuitry 142 enables the relay station 15 to assist in communications between one of the base stations 14 and one of the mobile stations 16. The receive circuitry 138 receives radio frequency signals bearing information from one or more of the base stations 14 and the mobile stations 16. A low noise amplifier and a filter (not shown) may cooperate to amplify and remove broadband interference from the signal for processing. Downconversion and digitization circuitry (not shown) will then downconvert the filtered, received signal to an intermediate or baseband frequency signal, which is then digitized into one or more digital streams. The relay stations 15 may implement one of several possible forwarding schemes such as decode-and-forward or amplify-and-forward, for example.

The baseband processor 134 processes the digital streams to extract information or data bits conveyed in the signal. This processing typically comprises demodulation, decoding, and error correction operations. The baseband processor 134 is generally implemented in one or more digital signal processors (DSPs) and application specific integrated circuits (ASICs).

For transmission, the baseband processor 134 receives digitized data, which may represent voice, video, data, or control information, from the control system 132, which it encodes for transmission. The encoded data is output to the transmit circuitry 136, where it is used by a modulator to modulate one or more carrier signals at a desired transmit frequency or frequencies. A power amplifier

(not shown) will amplify the modulated carrier signals to a level appropriate for transmission, and deliver the modulated carrier signal to the antennas 130 and 131 through a matching network (not shown). Various modulation and processing techniques available to those skilled in the art may be used for signal transmission between the mobile stations 16 and the base stations 14, either directly or indirectly via the relay stations 15, as described above.

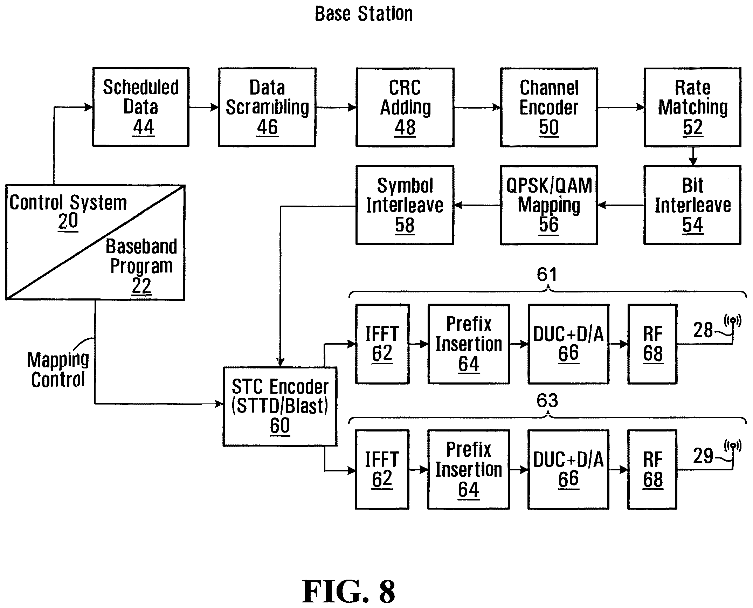

With reference to Figure 8, a logical OFDM transmission architecture will be described. Referring to Figure 4, initially, the base station controller 10 will send data to be transmitted to various ones of the mobile stations 16 to the base stations 14, either directly or with the assistance of one of the relay stations 15. The base stations 14 may use channel quality indicators (CQIs) associated with the mobile stations 16 to schedule the data for transmission and to select appropriate coding and modulation for transmitting the scheduled data. The CQIs may be provided directly by the mobile stations 16 or may be determined by the base station 14 based on information provided by the mobile stations 16. In either case, the CQI for each mobile station 16 is a function of the degree to which the channel amplitude (or response) varies across the OFDM frequency band. In one embodiment, predetermined channel responses are stored in a memory on the respective mobile station 16 and base station 14, and the mobile station determines the channel response and compares the determined channel response to the predetermined channel responses to determine a best match. The channel response information may then be provided to the base station 14 in the form of an identifier identifying the selected predetermined channel response, thereby avoiding transmission overhead associated with feeding back full channel response information to the base station.

Transmitting scheduled data to Mobile Station

Referring to Figures 4 and 8, the scheduled data 44, is a stream of bits and this stream is scrambled in a manner reducing the peak-to-average power ratio associated with the data using data scrambling logic 46. A cyclic redundancy check (CRC) for the scrambled data is determined and appended to the scrambled data using CRC adding logic 48. Next, channel coding is performed using a channel encoder 50 to effectively add redundancy to the data to facilitate recovery and error correction at the mobile stations 16. The channel coding for a particular one of the mobile stations 16 is based on the CQI associated with the particular mobile station. In some implementations, the channel encoder 50 uses known Turbo encoding techniques. The encoded data is then processed by rate matching logic 52 to compensate for data expansion associated with encoding.

Bit interleaver logic 54 systematically reorders the bits in the encoded data to minimize loss of consecutive data bits. The re-ordered data bits are systematically mapped into corresponding symbols depending on the chosen baseband modulation by mapping logic 56. Preferably, Quadrature Amplitude Modulation (QAM) or Quadrature Phase Shift Key (QPSK) modulation is used. The degree of modulation is chosen based on the CQI associated with the particular mobile station. The symbols may be systematically reordered using symbol interleaver logic 58 to further bolster the immunity of the transmitted signal to periodic data loss caused by frequency selective fading.

At this point, groups of bits have been mapped into symbols representing locations in an amplitude and phase constellation. When spatial diversity is desired, blocks of symbols are then processed by space-time block code (STC) encoder logic 60, which modifies the symbols in a fashion making the transmitted signals more resistant to interference and more readily decoded at the mobile stations 16. The STC encoder logic 60 will process the incoming symbols and provide "n" outputs corresponding to the number of the transmit antennas (n=2 for the case shown in Figure 8) for the base station 14. The control system 20 and/or the baseband processor 22 as described above with respect to Figure 8 will provide a mapping control signal to control the STC encoder. At this point, assume the symbols for the "n" outputs are representative of the data to be transmitted and capable of being recovered by the mobile stations 16.

For the present example, assume the base station (14 in Figure 4) has two of the transmit antennas 28 and 29 (n=2) and the STC encoder logic 60 provides two output streams of symbols. Each of the output streams of symbols is sent to a corresponding output path 61, 63, illustrated separately for ease of understanding. Those skilled in the art will recognize that one or more processors may be used to provide such digital signal processing, alone or in combination with other processing described herein. In each output path an IFFT processor 62 will operate on symbols provided to it to perform an inverse Fourier Transform. The output of the IFFT processor 62 provides symbols in the time domain. The time domain symbols (also known as OFDM symbols) are grouped into frames, by assigning a prefix by prefix insertion function 64. The resultant frame is up-converted in the digital domain to an intermediate frequency and converted to an analog signal via respective digital up-conversion (DUC) and digital-to-analog (D/A) conversion circuitry 66. The resultant (analog) signals from each output path are then simultaneously modulated at the desired RF frequency, amplified, and transmitted via RF circuitry 68 and the respective transmit antennas 28 and 29 to one of the mobile stations 16.

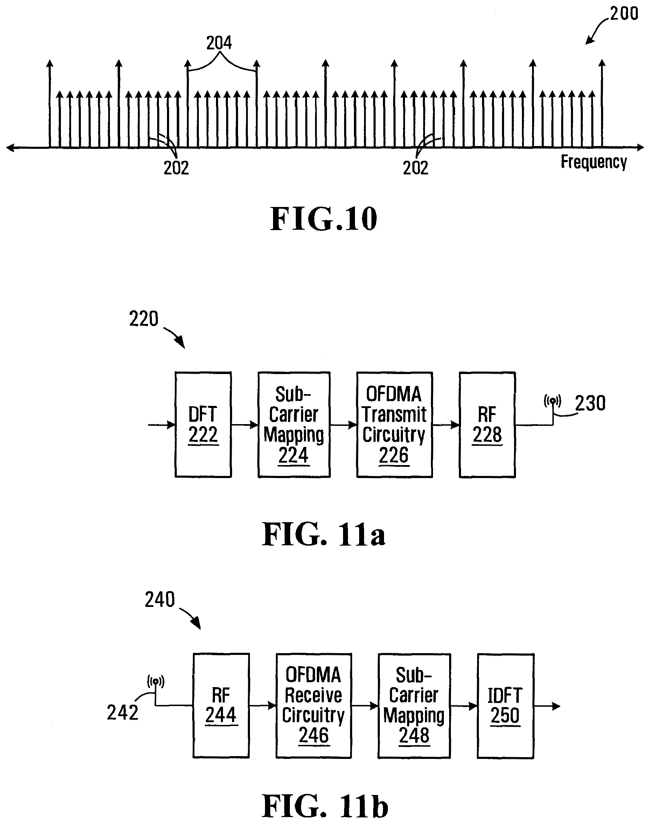

Referring to Figure 10, a representation of an exemplary frequency spectrum transmitted by the antennas 28 and 29 is shown generally at 200. The spectrum 200 includes a plurality of spaced subcarriers, including a plurality of data carriers 202. Notably, the spectrum 200 also includes a plurality of pilot signals 204 scattered among the subcarriers. The pilot signals 204 generally have a pre-determined pattern in both time and frequency that is known by the intended one of the mobile stations. In an OFDM transmission the pilot signal generally includes a pilot symbol. The mobile stations 16, which are discussed in detail below, use the pilot signals for channel estimation when determining the channel response.

Reception of signals at the Mobile Station

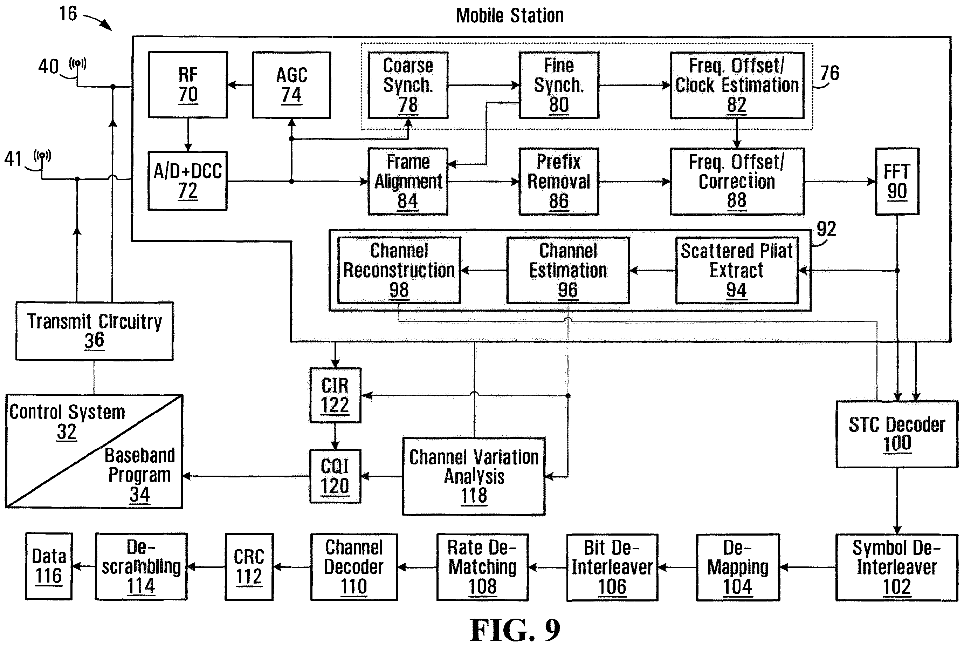

Reference is now made to Figure 9 to illustrate reception of the transmitted signals by one of the mobile stations 16, either directly from one of the base stations (14 in Figure 4) or with the assistance of one of the relay stations (15 in Figure 4). Upon arrival of the transmitted signals at each of the receive antennas 40 and 41 of one of the mobile stations 16, the respective signals are demodulated and amplified by corresponding RF circuitry 70. The receive circuitry 38 of the mobile station 16 may include two receive paths associated with each respective antenna 41 and 42, however for the sake of conciseness and clarity, only one of the two receive paths is described and illustrated in detail at 38 in Figure 9. Analog-to-digital (A/D) converter and down-conversion circuitry 72 digitizes and downconverts the analog signal for digital processing. The resultant digitized signal may be used by automatic gain control circuitry (AGC) 74 to control the gain of amplifiers in the RF circuitry 70 based on the received signal level.

Initially, the digitized signal is provided to synchronization logic shown generally at 76, which includes coarse synchronization function 78, which buffers several OFDM symbols and calculates an auto-correlation between the two successive OFDM symbols. A resultant time index corresponding to the maximum of the correlation result determines a fine synchronization search window, which is used by fine synchronization function 80 to determine a precise framing starting position based on the headers. The output of the fine synchronization function 80 facilitates frame acquisition by frame alignment logic 84. Proper framing alignment is important so that subsequent FFT processing provides an accurate conversion from the time domain to the frequency domain. The fine synchronization algorithm is based on the correlation between the received pilot signals carried by the headers and a local copy of the known pilot data. Once frame alignment acquisition occurs, the prefix of the OFDM symbol is removed with prefix removal logic 86 and resultant samples are sent to a frequency offset/correction function 88, which compensates for the system frequency offset caused by the unmatched local oscillators in a transmitter and a receiver.

Preferably, the synchronization logic 76 includes a frequency offset and clock estimation function 82, which uses the headers to help estimate frequency offset and clock offset in the transmitted signal and provide those estimates to the frequency offset/correction function 88 to properly process OFDM symbols.

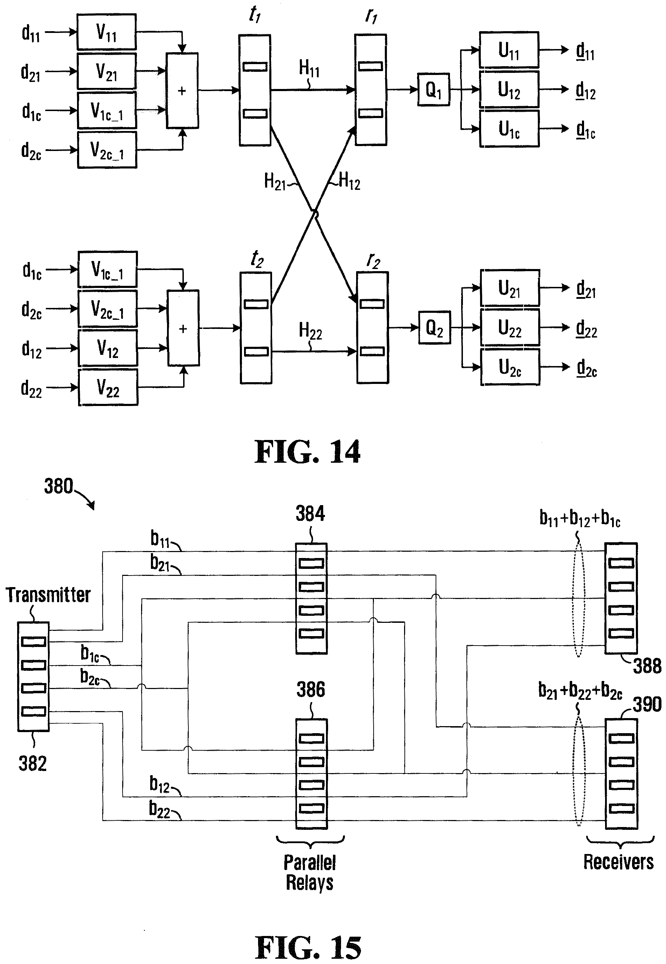

At this point, the OFDM symbols in the time domain are ready for conversion to the frequency domain by an FFT processing function 90. The result is a set of frequency domain symbols, which are sent to a processing function 92. The processing function 92 extracts the scattered pilot signals (shown in Figure 14 at 204) using a scattered pilot extraction function 94, determines a channel estimate based on the extracted pilot signal using a channel estimation function 96, and provides channel responses for all sub-carriers using a channel reconstruction function 98. In one embodiment channel estimation involves using information in the pilot signal to generate a transfer function for the transmission channel between the base station 14 and the mobile station 16. The channel estimation function 96 may provide a matrix of values defining the channel response. As shown in Figure 14, the pilot signal 204 is essentially multiple pilot symbols that are scattered among the data symbols throughout the OFDM sub-carriers in a known pattern in both time and frequency and facilitate determination of a channel response for each of the sub-carriers. The mobile station embodiment shown in Figure 9 also includes a channel impulse response function 122, which facilitates estimation of the signal interference noise ratio (SINR) using the received signal and the SINR. In this embodiment a channel quality indicator (CQI) function 120 provides a channel quality indication, which includes the SINR determined by the CIR function 122 and may also include a receiver signal strength indicator (RSSI).

Continuing with Figure 9, the processing logic compares the received pilot signals 204 with pilot signals that are expected in certain sub-carriers at certain times to determine a channel response for the sub-carriers in which pilot signals were transmitted. The results may be interpolated to estimate a channel response for most, if not all, of the remaining sub-carriers for which pilot signals were not provided. The actual and interpolated channel responses are used to estimate an overall channel response, which includes the channel responses for most, if not all, of the sub-carriers in the OFDM channel. Feedback of the channel response to the base station 14 is described in more detail below.

The frequency domain symbols and channel reconstruction information, which are derived from the channel responses for each receive path are provided to an STC decoder 100, which provides STC decoding on both received paths associated with the respective antennas 41 and 42 to recover the transmitted symbols. The channel reconstruction information provides equalization information to the STC decoder 100 sufficient to remove the effects of the transmission channel when processing the respective frequency domain symbols.

The recovered symbols are placed back in order using symbol de-interleaver logic 102, which corresponds to the symbol interleaver logic 58 of the transmitter. The de-interleaved symbols are then demodulated or de-mapped to a corresponding bitstream using de-mapping logic 104. The bits are then de-interleaved using bit de-interleaver logic 106, which corresponds to the bit interleaver logic 54 of the transmitter architecture. The de-interleaved bits are then processed by rate de-matching logic 108 and presented to channel decoder logic 110 to recover the initially scrambled data and the CRC checksum. Accordingly, CRC logic 112 removes the CRC checksum, checks the scrambled data in traditional fashion, and provides it to the de-scrambling logic 114 for de-scrambling using the known base station de-scrambling code to reproduce the originally transmitted data as data 116.

Still referring to Figure 9, in parallel with recovering the data 116, a CQI, or at least information sufficient to create a CQI at each of the base stations 14, is determined and transmitted to each of the base stations. As noted above, the CQI may be a function of the carrier-to-interference ratio (CR), as well as the degree to which the channel response varies across the various sub-carriers in the OFDM frequency band. For this embodiment, the channel gain for each sub-carrier in the OFDM frequency band being used to transmit information is compared relative to one another to determine the degree to which the channel gain varies across the OFDM frequency band. Although numerous techniques are available to measure the degree of variation, one technique is to calculate the standard deviation of the channel gain for each sub-carrier throughout the OFDM frequency band being used to transmit data.

In some embodiments, the relay stations may operate in a time division manner using only one radio, or alternatively include multiple radios.

In the embodiments shown in Figure 8 and Figure 9, the mobile station 16 transmits using multiple antennas (28, 29) and the mobile station receives the transmission using multiple antennas (40, 41), which is commonly referred to as a Multiple Input Multiple Output (MIMO) system. In other embodiments, the mobile station 16 may only have a single antenna (a Multiple Input Single Output (MISO) transmission system), or the base station and/or mobile station may use more than two antennas for transmitting and receiving signals.

Referring to Figure 11, in accordance with one embodiment of the present application, an exemplary Single Carrier Frequency-Division Multiple Access (SC-FDMA) transmitter 220 is shown in Figure 11a and a SC-FDMA receiver 240 is shown in Figure 11b for a single-in single-out (SISO) configuration. In SISO, mobile stations transmit on one antenna and base stations and/or relay stations receive on one antenna. Figure 11 illustrates a logical architecture for basic signal processing required by the transmitter 220 and receiver 240 for a LTE (Long Term Evolution) SC-FDMA uplink. SC-FDMA is a modulation and multiple access scheme introduced for the uplink of 3GPP Long Term Evolution (LTE) broadband wireless fourth generation (4G) air interface standards, and the like. The SC-FDMA transmitter includes a discrete Fourier transform (DFT) function 222, a sub-carrier mapping function 224, OFDMA transmit circuitry 226, and RF circuitry 228 for driving a transmit antenna 230. The SC-FDMA receiver 240 includes an antenna 242 for receiving transmitted signals, RF circuitry 244 for demodulating and amplifying the signals, OFDMA receive circuitry 246, a sub-carrier mapping function 224, and an Inverse discrete Fourier transform (IDFT) function 248. SC-FDMA can be viewed as a DFT pre-coded OFDMA scheme, or, it can be viewed as a single carrier (SC) multiple access scheme. There are several similarities in the overall transceiver processing of SC-FDMA and OFDMA. Those common aspects between OFDMA and SC-FDMA are illustrated in the OFDMA transmit circuitry 226 and OFDMA receive circuitry 246, as they would be obvious to a person having ordinary skill in the art in view of the present specification. SC-FDMA is distinctly different from OFDMA because of the DFT pre-coding of the modulated symbols, and the corresponding IDFT of the demodulated symbols. Because of this pre-coding, the SC-FDMA sub-carriers are not independently modulated as in the case of the OFDMA sub-carriers. As a result, peak-to-average power ratio (PAPR) of an SC-FDMA signal is lower than the PAPR of OFDMA signal. Lower PAPR greatly benefits the mobile station 16 in terms of transmit power efficiency.

Figures 4 to 11 provide one specific example of a communication system that could be used to implement embodiments of the application. It is to be understood that embodiments of the application can be implemented with communications systems having architectures that are different than the specific example, but that operate in a manner consistent with the implementation of the embodiments as described herein.

X-MIMO communications

In this application, the term X-MIMO is used to refer to a Multiple-Input-Multiple-Output communications between transmitter nodes and receiver nodes in which transmissions of data to a particular receiver occur from either different transmitters or different relays.

In the X-MIMO embodiments described herein, more than one multi-antenna transmitter and more than one multi-antenna-receiver are configured to communicate in the absence of data-exchange or channel state information (CSI) exchange between the transmitters (i.e. a non-cooperative transmission). There is also no data or CSI exchange between recievers. However, each transmitter is provided with information of the MIMO channel information by the respective recievers and transmitters and pre-coding or filtering is performed such that a dimension of the interference is minimized.

In general in the X-MIMO embodiments disclosed herein, each transmitter node sends a pilot signal for each antenna, where the pilot signals for each transmitter are orthogonal. Each receiver node estimates all of the incoming MIMO channels, and computes the specific receive filters and provides feedback information to the transmitter node (for example in the form of a compound filter and MIMO channel identification). Each transmitter node then computes a pre-coding filter based on the feedback of information from the receiver node, and sends pre-coded data to the receiver nodes using the computed precoding filter. Each receiver node applies the receive filter to the data to provide a filtered receive signal and then demodulates the signal to recover the data.

The X-MIMO embodiments achieve an increase in spectral efficiency by coordinating interference between data streams arriving at each receiver, such that the signal subspace is expanded resulting in accommodation of a higher number of data streams within the available signal subspace.

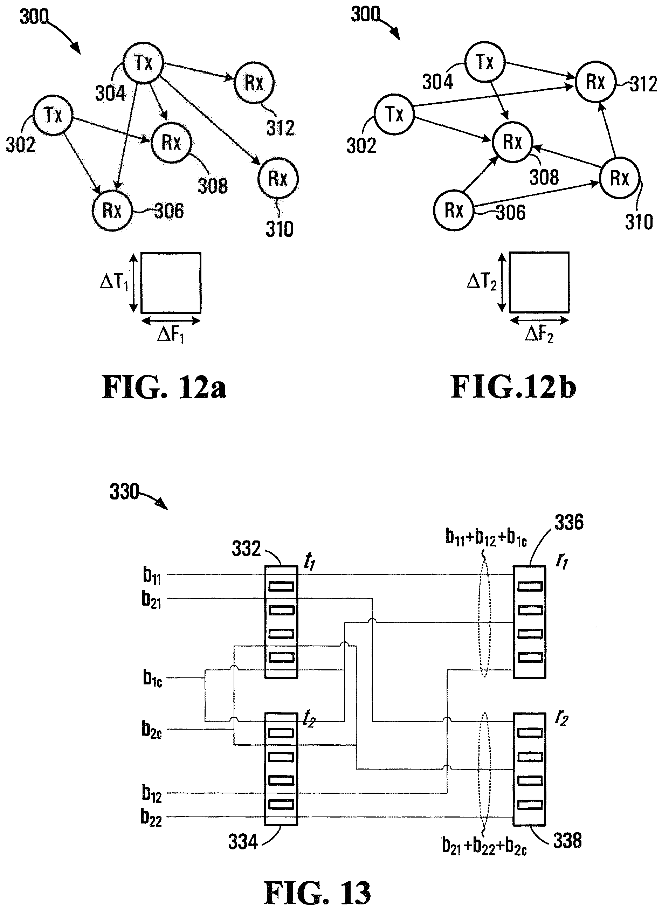

Referring to Figure 12 in one illustrative embodiment of the invention a communications system 300 includes two transmitters 302 and 304 (Tx nodes) and four receivers 306, 308, 310, and 312 (Rx nodes), in which each transmitter transmits data to several receivers and each receiver receives data from several transmitters. Each Tx node and each Rx node may include multiple antennas and associated transmit and receive circuitry. Referring to Figure 12a, a first transmission occurs in the time slot $\Delta T_1$ in the frequency bandwidth $\Delta F_1$. Referring to Figure 12b, a second transmission occurs in a time slot $\Delta T_2$ in the frequency bandwidth $\Delta F_2$. In the bandwidth and time slot $(\Delta T_1, \Delta F_1)$ the communications configuration may be different from the configuration of the bandwidth and time slot $(\Delta T_2, \Delta F_2)$ and signals transmitted at different times and different frequencies may be dependent or independent. For example, the bandwidth and time slot $(\Delta T_1, \Delta F_1)$ may include data associated with a first service (for example Video data) while the bandwidth and time slot $(\Delta T_2, \Delta F_2)$ may include data for another independent service (for example a VOIP call). Alternatively, the data in the different time and bandwidth slots may be for the same service. Another example of dependent signals would be space time coded signals or space frequency coded signals, in which multiple copies of a data stream are transmitted to improve the reliability of data-transfer.

More specifically, in the system 300 shown in Figure 12 we have 6 nodes, and in the $\Delta T_1$ time slot and in the $\Delta F_1$ bandwidth:

Tx node 302 sends data to Rx nodes 306 and 308;
Tx node 304 sends data to Rx nodes 306, 308, 310 and 312;
Rx node 308 receives data from Tx nodes 302 and 304;

Rx node 306 receives data from Tx nodes 302 and 304; and
Rx nodes 312 and 310 receive data only from Tx node 304.

In the $\Delta T_2$ time slot and in $\Delta F_2$ bandwidth:

Tx node 302 sends data to Rx nodes 308 and 312;
Tx node 304 sends data to Rx nodes 308 and 312;
Rx node 310 sends data to Rx nodes 306, 308, and 312;
Rx node 308 receives data from Tx nodes 302, 304, and Rx node 310;
Rx node 306 sends data to Rx nodes 308 and 310; and
Rx node 312 receives data from Tx nodes 302, 304 and Rx node 310.

The signals of the nodes 302 and 304 in $\Delta T_1$ time slot and in $\Delta F_1$ bandwidth and signals of the nodes 302, 304, 310 in $\Delta T_2$ time slot and in $\Delta F_2$ bandwidth may be dependent or independent.

Referring to Figure 13, as an example, an X-MIMO communications system 330 may be implemented in a multiple-antenna system having two transmitters (332, 334) and two receivers (336, 338) where transmitter $t$, $t = 1; 2$, are each equipped with $m_t$ antennas, receiver $r$, $r = 1, 2$, are each equipped with $n_r$ antennas and the channel between transmitters $t$ and receivers $r$ are represented by the channel matrix $H_{rt}$, where $H_{rt}$ is a $n_r$ by $m_t$ matrix.

The received vector $y_r$ by receiver $r$, $r = 1; 2$, is given by,

$$y_1 = H_{11}s_1 + H_{12}s_2 + w_1 \qquad \text{(Eqn 1)}$$

$$y_2 = H_{21}s_1 + H_{22}s_2 + w_2 \qquad \text{(Eqn 2)}$$

where:

$s_t$ represents the transmitted vector by transmitter $t$;
$w_r$ is noise vector at receiver $r$, and
$y_r$ is the received vector at receiver $r$.

Transmitter $t_1$ sends $b_{11}$ data streams to receiver $r_1$ and $b_{21}$ data streams to receiver $r_2$, and transmitter $t_2$ sends $b_{12}$ data streams to receiver $r_1$ and $b_{22}$ data streams to receiver $r_2$. Transmitters $t_1$ and $t_2$ cooperate to send $b_{1c}$ data streams to receiver $r_1$, and transmitters $t_1$ and $t_2$ cooperate to send $b_{2c}$ data streams to receiver $r_2$. The six sets of data streams may be dependent or independent. To modulate or demodulate the data streams, any linear or non-linear scheme or algorithm can be applied and $b_{rt}$ and $b_{rc}$ can be selected based on design requirements.

Zero-forcing preceding

Referring to Figure 14, in one embodiment an algorithm based on zero-forcing (ZF) linear pre-preprocessing and post-processing is implemented such that the data streams $b_{rt}$ and $b_{rc}$ do not interfere with each other. For simplicity in this embodiment, we assume that $n_1=n_2=m_1=m_2=m$ (i.e. each transmitter t has two antennas and each receiver r has two antennas).

For the example shown in Figure 14, we can write:

$$s_1 = V_{11}d_{11} + V_{12}d_{12} + V_{1c\_1}d_{1c} + V_{2c\_1}d_{2c} \qquad \text{(Eqn 3)}$$

$$s_2 = V_{12}d_{12} + V_{22}d_{22} + V_{1c\_2}d_{1c} + V_{2c\_2}d_{2c} \qquad \text{(Eqn 4)}$$

where

$s_t$ represents the transmitted vector by transmitter $t$;
$d_{rt}$ is a $b_{rt}$ dimensional vector, $r$, $t=1,2$, which include $b_{rt}$ data streams
$d_{1c}$ is a $b_{1c}$ dimensional vector, $r=1,2$, which include $b_{1c}$ data streams
$d_{2c}$ is a $b_{2c}$ dimensional vector, $r=1,2$, which include $b_{2c}$ data streams

$V_{rt}$ is a m times $b_{rt}$ matrix, $r$, $t=1,2$ which include $b_{rt}$ data stream
$V_{1c\_1}$ and $V_{1c\_2}$ are m times $b_{1c}$ matrices
$V_{2c\_1}$ and $V_{2c\_2}$ are m times $b_{2c}$ matrices
To decode $d_{rt}$, the received vector $y_r$ is passed through a filter $U_{rt}Q_r$
To decode $d_{1c}$, the received vector $y_1$ is passed through a filter $U_{1c}Q_1$
To decode $d_{2c}$, the received vector $y_2$ is passed through a filter $U_{2c}Q_2$

Exemplary, steps for selecting the system parameters follow below.

Step 1: Choosing integers $b_{rt}$, $r$, $t=1$, 2 and $b_{rc}$, $r=1$, 2

Select integers $b_{rt}$, $r$, $t=1,2$ and $b_{rc}$, $r=1,2$ such that the following constraints are satisfied:

$$b1c: b_{1c} + b_{2c} + b_{22} + b_{21} \leq 2m \qquad \text{(Eqn 5)}$$

$$b2c: b_{1c} + b_{2c} + b_{11} + b_{12} \leq 2m \qquad \text{(Eqn 6)}$$

$$b11: b_{11} + b_{2c} + b_{22} + b_{21} \leq m \qquad \text{(Eqn 7)}$$

$$b12: b_{12} + b_{2c} + b_{22} + b_{21} \leq m \qquad \text{(Eqn 8)}$$

$$b21: b_{21} + b_{1c} + b_{11} + b_{12} \leq m \qquad \text{(Eqn 9)}$$

$$b22: b_{22} + b_{1c} + b_{11} + b_{12} \leq m \qquad \text{(Eqn 10)}$$

$$b_{11} + b_{21} + b_{1c} \leq m \qquad \text{(Eqn 11)}$$

$$b_{11} + b_{21} + b_{2c} \leq m \qquad \text{(Eqn 12)}$$

$$b_{12} + b_{22} + b_{1c} \leq m \qquad \text{(Eqn 13)}$$

$$b_{12} + b_{22} + b_{1c} \leq m \qquad \text{(Eqn 14)}$$

$$b_{11} + b_{12} + b_{21} + b_{22} + b_{1c} + b_{2c} \leq 2m \qquad \text{(Eqn 15)}$$

Each of the first four inequalities (Eqns 5 - 8) correspond to one of the parameters $b_{rt}$, $b_{rc}$, $r$, $t=1$, 2, in the sense that if $b_{rt}$ or $b_{rc}$ $r$, $t=1$, 2, is zero, the corresponding inequality is removed from the set of constraints. Further constraints may be added based on the implementation of the system. If in a particular application, common messages are not of any interest, then $b_{1c}$ and $b_{2c}$ may be set to zero.

Step 2: Choosing matrices $Q_1$ and $Q_2$

Choose matrix $Q_1$ as an $(b_{1c}+b_{11}+b_{12})$ times $m$ arbitrary matrix; and
Choose matrix $Q_2$ as an $(b_{2c}+b_{21}+b_{22})$ times m arbitrary matrix.

$Q_1$ and $Q_2$ may be chosen based on any selected optimization criteria.

*Step 3: Choosing modulation matrices:*

Select modulation matrix $V_{11}$ such that columns of $V_{11}$ span null spaces of $Q_2 H_{21}$;
Select modulation matrix $V_{21}$ such that columns of $V_{21}$ span null spaces of $Q_1 H_{11}$;
Select modulation matrix $V_{12}$ such that columns of $V_{12}$ span null spaces of $Q_2 H_{22}$;
Select modulation matrix $V_{22}$ such that columns of $V_{22}$ span null spaces of $Q_1 H_{12}$;
Select modulation matrices $V_{1c\_1}$ and $V_{1c\_2}$ such that columns of $[(V_{1c\_1})^T, (V_{1c\_2})^T]^T$ span null space of the $[(Q_2 H_{21})^T, (Q_2 H_{22})^T]^T$; and
Select modulation matrices $V_{2c\_1}$ and $V_{2c\_2}$ such that columns of $[(V_{2c\_1})^T, (V_{2c\_2})^T]^T$ span null space of the $[(Q_1 H_{12})^T, (Q_1 H_{11})^T]^T$.

*Step 4: Choosing demodulation matrices:*

$U_{11}$ is selected such that the columns of $U_{11}$ are orthogonal to the columns of $Q_1 H_{12} V_{12}$ and $Q_1 [H_{11} H_{12}][(V_{1c\_1})^T, (V_{1c\_2})^T]^T$;
$U_{12}$ is selected such that the columns of $U_{12}$ are orthogonal to the columns of $Q_1 H_{11} V_{11}$ and $Q_1 [H_{11} H_{12}][(V_{1c\_1})^T, (V_{1c\_2})^T]^T$;
$U_{1c}$ is selected such that the columns of $U_{1c}$ are orthogonal to the columns of $Q_1 H_{11} V_{11}$ and $Q_1 H_{12} V_{12}$;
$U_{21}$ is selected such that the columns of $U_{21}$ are orthogonal to the columns of $Q_2 H_{22} V_{22}$ and $Q_2 [H_{21} H_{22}][(V_{2c\_1})^T, (V_{2c\_2})^T]^T$;
$U_{22}$ is selected such that the columns of $U_{22}$ are orthogonal to the columns of $Q_2 H_{21} V_{21}$ and $Q_2 [H_{21} H_{22}][(V_{2c\_1})^T, (V_{2c\_2})^T]^T$; and
$U_{2c}$ is selected such that the columns of $U_{2c}$ are orthogonal to the columns of $Q_2 H_{21} V_{21}$ and $Q_2 H_{22} V_{22}$.

Constraint equations 5 - 15 above guarantee that such transmit and receive filters can be designed. The above steps are based on nulling the interference of data streams over each other. In other embodiments, alternative linear or nonlinear schemes such as Minimum Mean Square Error (MMSE), successive decoding, dirty-paper-coding, etc. may be used in place of the zero-forcing precoding algorithm as described above.

Zero-forcing precoding with frequency extension

In the above zero-forcing precoding algorithm, it is assumed that each node has m antennas, providing *m* spatial dimensions. In another embodiment, additional spatial dimensions may be provided using time and frequency resources. As an example, the above embodiment in which spatial dimensions are provided by physical antennas is extended to a case, where *J* frequency sub-bands are implemented. In this embodiment each transmitter *t, t=1,* 2, is equipped with $m_t$ antennas and each receiver *r, r=1,* 2, is equipped with $n_r$ antennas. The channel between transmitter *t* and receiver *r* is at sub-band j, *j=1, ...,J,* represented by the channel matrix $H_{rt}(j)$, where $H_{rt}(j)$ is a $n_r$ by $m_t$ complex matrix. The received vector $y_r(j)$ by receiver *r, r=1,* 2, is given by:

$$y_1(j) = H_{11}(j)s_1(j) + H_{12}(j) + w_1(j) \qquad \text{(Eqn 16)}$$

$$y_2(j) = H_{21}(j)s_1(j) + H_{22}(j) + w_2(j) \qquad \text{(Eqn 17)}$$

where:

$s_t(j)$ represents the transmitted vector by transmitter *t* at frequency sub-band *j*;
$w_r(j)$ is noise vector at receiver *r* at frequency sub-band *j*; and
$y_r(j)$ is the received vector at receiver *r* at frequency sub-band *j*.

$H_{rt}$, $s_r$, and $y_r$ may be defined as follows:

$$H_{rt} = \begin{bmatrix} H_{rt}(1) & 0 & 0 & 0 \\ 0 & H_{rt}(2) & 0 & 0 \\ 0 & 0 & \ddots & 0 \\ 0 & 0 & 0 & H_{rt}(J) \end{bmatrix}, s_t = \begin{bmatrix} s_t(1) \\ s_t(1) \\ \vdots \\ s_t(J) \end{bmatrix} y_r = \begin{bmatrix} y_r(1) \\ y_r(1) \\ \vdots \\ y_r(J) \end{bmatrix} r, t = 1, 2$$

Again, as in the previous embodiment, zero-forcing precoding is used and it is assumed that $n_1 = m = m_1 = m_2 = m$. The transmitted vectors may be written as:

$$s_1 = V_{11}d_{11} + V_{12}d_{12} + V_{1c\_1}d_{1c} + V_{2c\_1}d_{2c} \qquad \text{(Eqn 18)}$$

$$s_2 = V_{12}d_{12} + V_{22}d_{22} + V_{1c\_2}d_{1c} + V_{2c\_2}d_{2c} \qquad \text{(Eqn 19)}$$

where:

$d_{rt}$ is a $b_{rt}$ dimensional vector, $r, t=1, 2$, which include $b_{rt}$ data streams
$d_{1c}$ is a $b_{1c}$ dimensional vector, $r=1, 2$, which include $b_{1c}$ data streams
$d_{2c}$ is a $b_{2c}$ dimensional vector, $r=1, 2$, which include $b_{2c}$ data streams
$V_{rt}$ is a m times $b_{rt}$ matrix, $r, t=1, 2$ which include $b_{rt}$ data stream
$V_{1c\_1}$ and $V_{1c\_2}$ are $J.m$ times $b_{1c}$ matrices
$V_{2c\_1}$ and $V_{2c\_2}$ are $J.m$ times $b_{2c}$ matrices
To decode $d_{rt}$, the received vector $y_r$ is passed through a filter $U_{rt}Q_r$
To decode $d_{1c}$, the received vector $y_1$ is passed through a filter $U_{1c}Q_1$
To decode $d_{2c}$, the received vector $y_2$ is passed through a filter $U_{2c}Q_2$

Exemplary, steps for selecting the system parameters follow below.

*Step 1: Choosing integers $b_{rt}$, r, r, t=1, 2 and $b_{rc}$, r=1, 2*

Select integers $b_{rt}$, r, t=1, 2 and $b_{rc}$, r=1, 2, such that the following constraints are satisfied:

$$b1c: b_{1c} + b_{2c} + b_{22} + b_{21} \leq 2J.m \qquad \text{(Eqn 20)}$$

$$b2c: b_{1c} + b_{2c} + b_{11} + b_{12} \leq 2J.m \qquad \text{(Eqn 21)}$$

$$b11: b_{11} + b_{2c} + b_{22} + b_{21} \leq J.m \qquad \text{(Eqn 22)}$$

$$b12: b_{12} + b_{2c} + b_{22} + b_{21} \leq J.m \qquad \text{(Eqn 23)}$$

$$b21: b_{21} + b_{1c} + b_{11} + b_{12} \leq J.m \qquad \text{(Eqn 24)}$$

$$b22: b_{22} + b_{1c} + b_{11} + b_{12} \leq J.m \qquad \text{(Eqn 25)}$$

$$b_{11} + b_{21} + b_{1c} \leq J.m \qquad \text{(Eqn 26)}$$

$$b_{11} + b_{21} + b_{2c} \leq J.m \qquad \text{(Eqn 27)}$$

$$b_{12} + b_{22} + b_{1c} \leq J.m \qquad \text{(Eqn 28)}$$

$$b_{12} + b_{22} + b_{1c} \leq J.m \qquad \text{(Eqn 29)}$$

$$b_{11} + b_{12} + b_{21} + b_{22} + b_{1c} + b_{2c} \leq 2J.m \qquad \text{(Eqn 30)}$$

Each of the first four inequalities in Eqns 21 - 23 correspond to one of the parameters $b_{rt}$, $b_{rc}$, $r$, $t=1$, 2, in the sense that if $b_{rt}$, or $b_{rc}$ $r$, $t=1$, 2, is zero, the corresponding inequality is removed from the set of constraints. Further constraints may be added based on the implementation of the system. If in a particular application, common messages are not of any interest, then $b_{1c}$ and $b_{2c}$ may be set to zero.

*Step 2: Choosing matrices $Q_1$ and $Q_2$*

Choose matrix $Q_1$ as an $(b_{1c}+b_{11}+b_{12})$ times $m$ arbitrary matrix; and
Choose matrix $Q_2$ as an $(b_{2c}+b_{21}+b_{22})$ times $m$ arbitrary matrix.

$Q_1$ and $Q_2$ can be chosen based on any selected optimizing criteria

*Step 3: Choosing modulation matrices:*

Select modulation matrix $V_{11}$ such that columns of $V_{11}$ span null spaces of $Q_2 H_{21}$;
Select modulation matrix $V_{21}$ such that columns of $V_{21}$ span null spaces of $Q_1 H_{11}$;
Select modulation matrix $V_{12}$ such that columns of $V_{12}$ span null spaces of $Q_2 H_{22}$;
Select modulation matrix $V_{22}$ such that columns of $V_{22}$ span null spaces of $Q_1 H_{12}$;
Select modulation matrices $V_{1c\_1}$ and $V_{1c\_2}$ such that columns of $[(V_{1c\_1})^T,(V_{1c\_2})^T]^T$ span null space of the $[(Q_2 H_{21})^T,(Q_2 H_{22})^T]^T$; and
Select modulation matrices $V_{2c\_1}$ and $V_{2c\_2}$ such that columns of $[(V_{2c\_1})^T,(V_{2c\_2})^T]^T$ span null space of the $[(Q_1 H_{12})^T,(Q_1 H_{11})^T]^T$.

*Step 4: Choosing demodulation matrices:*

$U_{11}$ is selected such that the columns of $U_{11}$ is orthogonal to the columns of $Q_1 H_{12} V_{12}$ and $Q_1[H_{11}H_{12}][(V_{1c\_1})^T,(V_{1c\_2})^T]^T$;
$U_{12}$ is selected such that the columns of $U_{12}$ is orthogonal to the columns of $Q_1 H_{11} V_{11}$ and $Q_1[H_{11}H_{12}][(V_{1c\_1})^T,(V_{1c\_2})^T]^T$;
$U_{1c}$ is selected such that the columns of $U_{1c}$ is orthogonal to the columns of $Q_1 H_{11} V_{11}$ and $Q_1 H_{12} V_{12}$;
$U_{21}$ is selected such that the columns of $U_{21}$ is orthogonal to the columns of $Q_2 H_{22} V_{22}$ and $Q_2[H_{21}H_{22}][(V_{2c\_1})^T,(V_{2c\_2})^T]^T$;
$U_{22}$ is selected such that the columns of $U_{22}$ is orthogonal to the columns of $Q_2 H_2 V_{21}$ and $Q_2[H_{21}H_{22}][(V_{2c\_1})^T,(V_{2c\_2})^T]^T$; and
$U_{2c}$ is selected such that the columns of $U_{2c}$ is orthogonal to the columns of $Q_2 H_{21} V_{21}$ and $Q_2 H_{22} V_{22}$.

Constraint equations 20 - 30 above guarantee that such transmit and receive filters can be designed.

Example 1: Multiple relays in downlink

Referring to Figure 15, an example of a system configuration using a pair of relays in a downlink transmission is shown generally at 380. In this example, a base station has a transmitter 382 having four antennas and transmission is via two relays 384 and 386 to two receivers 388 and 390. The transmitter 382 transmits six data streams. Data streams

$b_{11}$, and $b_{21}$ are transmitted to relay 384, data streams $b_{12}$ and $b_{22}$ are transmitted to relay 386, data streams $b_{1c}$ are transmitted to each of relays 384 and 386 and data stream $b_{2c}$ is also transmitted to each of the relays 384 and 386. The relay 384 forwards data streams $b_{11}$, $b_{12}$, and $b_{1c}$ to receiver 388. The relay 386 forwards data streams $b_{21}$, $b_{22}$, and $b_{2c}$ to receiver 388. The receiver 388 thus receives data stream $b_{1c}$ from both relay 384 and relay 386, and receiver 390 also receives data stream $b_{2c}$ from both relays.

Example 2: Multiple relays in uplink

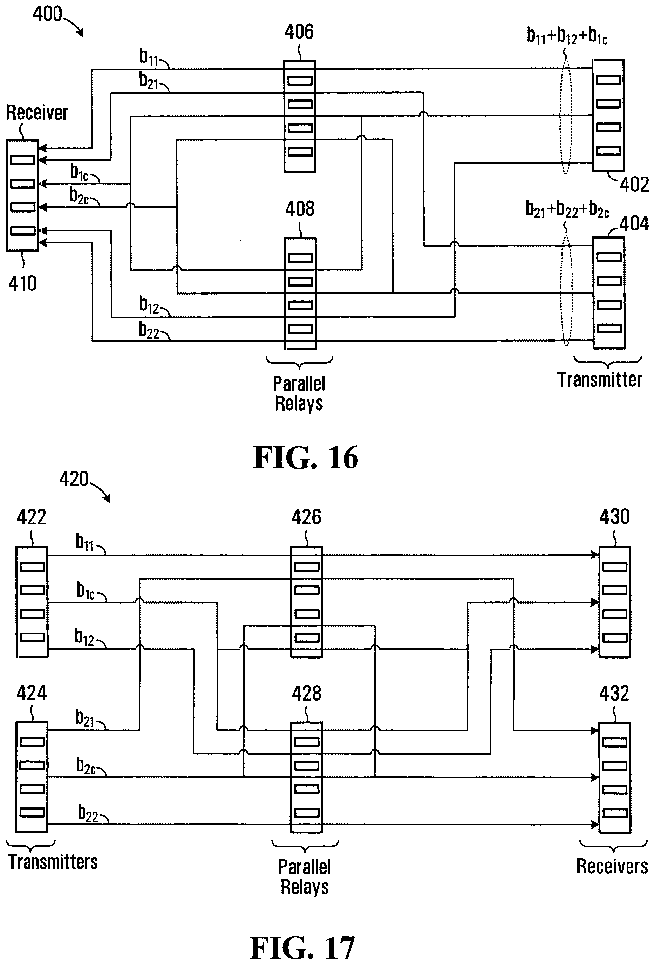

Referring to Figure 16, an example of a system configuration using a pair of relays in an uplink transmission is shown generally at 400. In this example, there are two transmitters 402 and 404 each having four antennas and transmission is via two relays 406 and 408 to a single receiver 410. The transmitter 402 transmits three data streams $b_{11}$, $b_{12}$ and $b_{1c}$. Data streams $b_{11}$, and $b_{21}$ are transmitted to relay 406, data streams $b_{12}$ and $b_{22}$ are transmitted to relay 408, data stream $b_{1c}$ is transmitted to each of relays 406 and 408 and data stream $b_{2c}$ is also transmitted to each of the relays 406 and 408. The relay 406 forwards data streams $b_{11}$, $b_{12}$, and $b_{1c}$ to the receiver 410. The relay 408 forwards data streams $b_{21}$, $b_{22}$, and $b_{2c}$ to the receiver 410. The receiver 410 thus receives data stream $b_{1c}$ from both relay 406 and relay 408.

Example 3: Multiple relays in an interference link

Referring to Figure 17, an interference channel downlink system is shown generally at 420. The system 420 includes two transmitters 422 and 424, each having four antennas for a total of eight antennas. The two transmitters may be located in the same base station or may be located in different base stations. The system 420 further includes two relays 426 and 428 each having four antennas for forwarding data streams to two receivers 428 and 430, which also each have four antennas. Two transmission signalling schemes that may be implemented on the system 420 are considered including a first case in which signals provided to the relays 426 and 428 are correlated and a second case where signals provided to the relays are uncorrelated.

*Case 1: correlated signals at the relays*

Considering a period of time $T$, during a first portion of the time period *[0, T/2]*, the transmitter 422 transmits:

a data stream $b_{11}$ intended for receiver 430, to relay 426;
a data stream $b_{12}$, intended for receiver 430, to relay 428;
a data stream $b_{1c}$, intended for receiver 430, to both relays 426 and 428;

while the transmitter 424 simultaneously transmits:

a data stream $b_{21}$, intended for receiver 432, to relay 426;
a data stream $b_{22}$, intended for receiver 432, to relay 428; and
a data stream $b_{2c}$, intended for receiver 432, to both relays 426 and 428.

During a second portion of the period of time $T$ (i.e. *[T/2, T]*) relays 426 and 428 each simultaneously transmit the received data streams to the respective receivers 430 and 432, using the zero-forcing precoding algorithm described above with $b_{11}=b_{12}=b_{21}=b_{22}=b_{1c}=b_{2c}=1$. The overall capacity or throughput of the system 420 is thus:

$$C = 3\log(P_T)$$

where $P_T$ represents total power, and C represents overall channel capacity. The number of incoming data streams at each relay 426, 428 is the same as the number of outgoing data streams at each relay.

*Case 2: uncorrelated signals at the relays*

Considering a period of time $T$, during a first portion of the time period *[0,2T/5]*, the transmitter 422 transmits:

Two data streams $b_{11}$, intended for receiver 430, to relay 426;
Two data streams $b_{12}$, intended for receiver 430, to relay 428;.

while the transmitter 424 simultaneously transmits:

Two data streams $b_{21}$, intended for receiver 432, to relay 428; and
Two data streams $b_{22}$, intended for receiver 432, to relay 428.

In this example data streams $b_{1c}$ and $b_{2c}$ are not transmitted. During a second portion of the time period T (i.e. *[2T/5, T]*), relays 426 and 428, simultaneously transmit the data streams to receiver 430 and 432, using the zero-forcing precoding algorithm described above with $b_{11}=b_{12}=b_{21}=b_{22}=4$, $b_{1c}=b_{2c}=0$, and J=3 (i.e 3 frequency sub-bands). The overall capacity of this algorithm is:

$$C = \frac{16}{5}\log(P_T)$$

Again, $P_T$ represents total power, C is the overall channel capacity and the number of incoming data streams at each relay 426, 428 is the same as the number of outgoing data streams at each relay.
In contrast, in a conventional scheme during a first portion of the time period T (i.e *[0, T/3])*, the transmitter 422 transmits four data streams intended for receiver 430 to relay 426, and the transmitter 424 transmits four data streams intended for receiver 432 to relay 428. During a second portion of the time period T, (i.e. *[T/3, 2T/3])*, relay 426 transmits four data streams to receiver 430 and during a third portion of the time period T, (i.e. *[2T/3, T])*, relay 428 transmits four data streams to receiver 432. The overall capacity of this scheme is:

$$C = \frac{8}{3}\log(P_T)$$

where PT represents total power. This is the best achievable rate with conventional scheme. It is clear that Case 1 and Case 2 of example 3 that are based on the zero-forcing precoding algorithm above thus have better throughput than the conventional scheme described above.
Advantageously, in the above examples, performance of the communication system is improved in terms of overall throughput, with corresponding improvements in reliability and coverage. The zero-forcing precoding may thus be applied to improve the performance of an existing MIMO communication system, and may be generalized to any number of transmitters and receivers. The embodiments shown in Figure 15 (uplink communications with parallel relays), Figure 16 (downlink communications with parallel relays), and Figure 17 (Interference channel communications with parallel relays) may be implemented in wireless communication systems and may be generalized to support any number of transmitters, relays, and receivers. The above methods and configurations may be applied to many other wireless applications, such as multi-hop relay and distributed MIMO networking, for example.
While the embodiments in the above examples and disclosure are implemented using zero-forcing precoding, other linear or non-linear filters or precoding techniques may be implemented. For example, other known schemes such as dirty-paper coding, successive decoding, MMSE filters, etc. may be implemented in place of zero-forcing precoding, depending on the configuration and requirements of the system.
Advantageously, the X-MIMO embodiments disclosed above provide solutions to several fundamental difficulties in distributed broadband wireless networking. For example, achieving a higher multiplexing gain in the absence of data exchange between transmitters and/or receivers overcomes one major obstacle in enable distributed multi-user communications. Furthermore, the multiple-relay examples above enable relay node sharing between the multiple data paths and support distinct source-destination routing.
Additionally, the disclosed X-MIMO embodiments facilitate a reduction in the number of antennas required to achieve a desired spectral efficiency, or increase the spectral efficiency for an existing MIMO antenna configuration. For example, in a communications system of two receivers and two transmitters, a conventional receiver requires four receive antennas for each receiver in order to achieve a multiplexing again of 4. For the X-MIMO embodiments disclosed herein, three receive antennas for each receiver would achieve the same multiplexing gain of 4, without suffering a penalty in required transmit power or bandwidth.
While specific embodiments of the invention have been described and illustrated, such embodiments should be considered illustrative of the invention only and not as limiting the invention as described in the clauses below.

**CLAUSES**

1. A method for receiving a wireless transmission of a plurality of data streams in a wireless communication system having a plurality of nodes, each node having multiple antennas, the method comprising:

receiving first and second data streams from respective first and

second nodes at a receiver node;

causing said receiver node to generate a receive filter for decoding each of the received data streams; and

causing said receiver node to transmit receive filter information for each of said first and second data streams, said receive filter information facilitating precoding of said first and second data streams for simultaneous transmission within a common frequency band to said receiver node.

2. The method of clause 1 wherein causing said receiver node to generate said receive filter comprises:

causing said receiver node to perform channel estimation using pilot signals associated with said respective first and second data streams;

comparing said channel estimate for the respective first and second data streams to a plurality of predetermined channel estimates stored on said receiver node to determine a best match between said channel estimate and one of said plurality of predetermined channel estimates for each said channel estimate; and

for each of said first and second data streams, transmitting a channel estimate identifier identifying said best match channel estimate.

3. The method of clause 1 wherein causing said receiver node to generate said receive filter comprises using a zero-forcing algorithm to generate said filter.

4. The method of clause 1 wherein causing said receiver node to generate said receive filter comprises causing said receiver node to generate a receive filter for decoding each of the received data streams in the absence of information associated with data streams transmitted to other receiver nodes in the communication system.

5. The method of clause 1 wherein said receiver node is a first receiver node and further comprising:

receiving third and fourth data streams from respective first and second nodes at a second receiver node;

causing said second receiver node to generate a receive filter for decoding each of the received data streams; and

causing said second receiver node to transmit receive filter information for each of said third and fourth data streams, said receive filter information facilitating precoding of said third and fourth data streams for simultaneous transmission within a common frequency band to said second receiver node.

6. The method of clause 1 wherein receiving said first and second data streams comprises receiving data within a common frequency band comprising a plurality of sub-band frequencies.

7. A method for transmitting a plurality of data streams in a wireless communication system having a plurality of nodes, each node having multiple antennas, the method comprising:

causing first and second nodes in the wireless communication system to transmit respective first and second data streams to a receiver node;

receiving receive filter information for each of said first and second data streams from said receiver node; and

precoding said respective first and second data streams for simultaneous transmission within a common frequency band to said receiver node.

8. The method of clause 7 wherein causing said first and second nodes to transmit said respective first and second data streams comprises causing first and second transmitter nodes to transmit said respective first and second data streams.

9. The method of clause 8 wherein said precoding comprises:

receiving a first channel estimate identifier associated with said first data stream at said first transmitter node and locating a corresponding first predetermined channel estimate stored on the first transmitter node and using said first predetermined channel response to perform said precoding of the first data stream; and

receiving a second channel estimate identifier associated with said second data stream at said second transmitter node and locating a corresponding second predetermined channel estimate stored on the second transmitter node and using said second predetermined channel response to perform said precoding of the second data stream.

10. The method of clause 9 wherein performing said precoding of said first data stream and performing said precoding of said second data stream comprises independently precoding each of said respective first and second data streams in the absence of information associated with the other data stream.

11. The method of clause 7 wherein causing said first and second nodes to transmit said respective first and second data streams comprises causing first and second relay nodes to transmit said respective first and second data streams.

12. The method of clause 11 wherein causing said first and second relay nodes to transmit said respective first and second data streams comprises causing at least one transmitter node to transmit said first and second data streams to said first and second relay nodes for relaying to said receiver node.

13. The method of clause 12 wherein causing said at least one transmitter node to transmit said first and second data streams comprises causing a first transmitter node to transmit said first data stream to said first relay node and causing a second transmitter node to transmit said second data stream to said second relay node.

14. The method of clause 7 wherein said precoding comprises precoding said respective first and second data streams for simultaneous transmission
within a common frequency band comprising a plurality of sub-band frequencies.

15. A receiver node apparatus for receiving a wireless transmission of a plurality of data streams in a wireless communication system having a plurality of nodes, each node having multiple antennas, the apparatus comprising:

a receiver for receiving first and second data streams from respective first and second nodes at a receiver node;

a processor operably configured to generate a receive filter for decoding each of the received data streams; and

a transmitter operably configured to transmit receive filter information for each of said first and second data streams, said receive filter information facilitating precoding of said first and second data streams for simultaneous transmission within a common frequency band to said receiver node.

16. The apparatus of clause 15 wherein said processor is operably configured to:

cause said receiver node to perform channel estimation using pilot signals associated with said respective first and second data streams;

compare said channel estimate for said first and second data streams to a plurality of predetermined channel estimates stored on said receiver node to determine a best match between said channel estimate and one of said plurality of predetermined channel estimates for each said channel estimate; and

wherein said transmitter is operably configured to transmit a channel estimate identifier identifying said best match channel estimate for each of said first and second data streams.

17. The apparatus of clause 15 wherein said processor is operably configured to generate said receive filter using a zero-forcing algorithm.

18. The apparatus of clause 15 wherein said processor is operably configured to generate said receive filter in the absence of information associated with data streams transmitted to other receiver nodes in the communication system.

19. The method of clause 15 wherein said receiver is operably configured to receive data within a common frequency band comprising a plurality of sub-band frequencies.

20. A wireless communication system for transmitting a plurality of data streams, the system comprising:

first and second nodes operably configured to transmit respective first and second data streams;

a receiver node operably configured to receive said first and second data streams, said receiver node being further configured to generate a receive filter for decoding each of the received data streams and to transmit receive filter information for each of said first and second data streams;

at least one transmitter node operably configured to receive said respective receive filter information for each of said first and second data streams from said receiver node and to precode said respective first and second data streams for simultaneous transmission within a common frequency band to said receiver node.

21. The system of clause 20 wherein each of said first and second nodes
comprise a relay node operably configured to receive said respective first and second data streams from said at least one transmitter node and to relay said data streams to said receiver node.

**Claims**

1. A method for receiving a wireless transmission of a plurality of data streams transmitted by a plurality of transmitter nodes in a wireless communication system having a plurality of receiver nodes, each transmitter node and each receiver having multiple antennas, the method comprising:

receiving, at a first receiver node, first signal comprising first and second data streams from first and second transmitter nodes, respectively;
receiving, at a second receiver node, second signal comprising third and fourth data streams from the first and second transmitter nodes, respectively;
generating, at the first receiver node, a first receive filter for recovering the first and second data streams;
generating, at the second receiver node, a second receive filter for recovering the third and fourth data streams; and
transmitting, from the first receiver node to the first transmitter node, information of the first receive filter and channel information between the first transmitter node and the first receiver node;,
transmitting, from the first receiver node to the second transmitter node, information of the first receive filter and channel information between the second transmitter node and the first receiver node;
transmitting, from the second receiver node to the first transmitter node, information of the second receive filter and channel information between the first transmitter node and the second receiver node;
transmitting, from the second receiver node to the second transmitter node, information of the second receive filter and channel information between the second transmitter node and the second receiver node;
wherein said receive filter information and channel information facilitate precoding of simultaneous transmissions of said first, second, third, and fourth data streams by said first and second transmitter nodes within a common frequency band to said first and second receiver nodes.

2. The method of claim 1 wherein generating said first and second receive filters comprises:

performing channel estimation using pilot signals associated with said respective first and second data streams;
comparing said channel estimate for the respective first and second data streams to a plurality of predetermined channel estimates stored on said first receiver node to determine a best match between said channel estimate and one of said plurality of predetermined channel estimates for each said channel estimate;
performing channel estimation using pilot signals associated with said respective third and fourth data streams;
comparing said channel estimate for the respective third and fourth data streams to a plurality of predetermined channel estimates stored on said second receiver node to determine a best match between said channel estimate and one of said plurality of predetermined channel estimates for each said channel estimate; and for each of said first, second, third, and fourth data streams, transmitting a channel estimate identifier identifying said best match channel estimate.

3. The method of claim 2, wherein the pilot signals for each of the first and second data streams are orthogonal, and the pilot signals for each of the third and fourth data streams are orthogonal.

4. The method of claim 1 wherein generating said receive filters comprises using one of: a zero-forcing algorithm, dirty-paper coding and successive decoding to generate said filter, or generating a minimum mean squared error (MMSE) filter.

5. The method of claim 1 wherein generating said first receive filter comprises generating a receive filter for recovering each of the first and second data streams in the absence of information associated with the third and fourth data streams transmitted to the second receiver node in the communication system, and generating said second receive filter comprises generating a receive filter for recovering each of the third and fourth data streams in the absence of information associated with the first and second data streams transmitted to the first receiver node in the communication system.

6. The method of claim 1 wherein receiving said first, second, third, and fourth data streams comprises receiving data within a common frequency band comprising a plurality of sub-band frequencies.

7. A computer-readable storage medium storing instructions which, when executed on a computer, cause the computer to perform the steps of the method defined in any one of claims 1 to 6.

**FIG.1**

**FIG. 2**

**FIG. 3**

**FIG. 4**

**FIG. 5**

**FIG. 6**

**FIG. 7**

**Base Station**

FIG. 8

**FIG. 9**

EP 3 793 094 A1

FIG.10

FIG. 11a

FIG. 11b

**FIG. 12a**

**FIG.12b**

**FIG. 13**

**FIG. 14**

**FIG. 15**

400

406

$b_{11}$

$b_{21}$

Receiver

$b_{1c}$

$b_{2c}$

410

408

$b_{12}$

$b_{22}$

Parallel
Relays

$b_{11}+b_{12}+b_{1c}$

402

$b_{21}+b_{22}+b_{2c}$

404

Transmitter

# FIG. 16

420

422

426

430

$b_{11}$

$b_{1c}$

$b_{12}$

424

428

432

$b_{21}$

$b_{2c}$

$b_{22}$

Transmitters

Parallel
Relays

Receivers

# FIG. 17

Europäisches
Patentamt

European
Patent Office

Office européen
des brevets

# EUROPEAN SEARCH REPORT

Application Number

EP 20 18 2637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/084903 A2 (LG ELECTRONICS INC [KR]; JUNG JIN HYUK [KR] ET AL.) 9 July 2009 (2009-07-09) | 1-3,5-7 | INV. H04B7/024 H04B7/06 |
| Y | * page 9, line 13 - page 10, line 15; figure 1 * <br> * page 14, line 14 - line 23; figures 2a,3 * | 4 | |
| Y | MUNDARATH J C ET AL: "Multi-User Multi-Input Multi-Output (MU-MIMO) Downlink Beamforming Systems with Limited Feedback", 2008 IEEE GLOBAL TELECOMMUNICATIONS CONFERENCE : [IEEE GLOBECOM 2008] ; NEW ORLEANS, LOUISIANA, 30 NOVEMBER 2008 - 04 DECEMBER 2008, IEEE, PISCATAWAY, NJ, USA, 30 November 2008 (2008-11-30), pages 1-6, XP031370420, ISBN: 978-1-4244-2324-8 | 4 | |
| A | * Section 2; page 2 * | 1-3,5-7 | |
| A | US 2009/143008 A1 (HOTTINEN ARI [FI] ET AL) 4 June 2009 (2009-06-04) * paragraphs [0002], [0022] - [0029], [0040] - [0042]; figure 1 * | 1-7 | TECHNICAL FIELDS SEARCHED (IPC) <br> H04B |
| A | WO 2009/082179 A2 (LG ELECTRONICS INC [KR]; LIM DONG GUK [KR]; KIM SU NAM [KR]; IHM BIN C) 2 July 2009 (2009-07-02) * page 15 - page 16; figure 1 * | 1-7 | |

The present search report has been drawn up for all claims

| Place of search | Date of completion of the search | Examiner |
|---|---|---|
| Munich | 14 January 2021 | Sälzer, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 793 094 A1**

## ANNEX TO THE EUROPEAN SEARCH REPORT
## ON EUROPEAN PATENT APPLICATION NO.

EP 20 18 2637

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2021

| Patent document cited in search report | | | Publication date | Patent family member(s) | | | Publication date |
|---|---|---|---|---|---|---|---|
| WO 2009084903 | A2 | | 09-07-2009 | CN | 101911522 | A | 08-12-2010 |
| | | | | EP | 2227866 | A2 | 15-09-2010 |
| | | | | JP | 5129346 | B2 | 30-01-2013 |
| | | | | JP | 2011509040 | A | 17-03-2011 |
| | | | | KR | 20090073758 | A | 03-07-2009 |
| | | | | US | 2010309998 | A1 | 09-12-2010 |
| | | | | WO | 2009084903 | A2 | 09-07-2009 |
| US 2009143008 | A1 | | 04-06-2009 | CN | 101878598 | A | 03-11-2010 |
| | | | | EP | 2220783 | A2 | 25-08-2010 |
| | | | | KR | 20100086064 | A | 29-07-2010 |
| | | | | US | 2009143008 | A1 | 04-06-2009 |
| | | | | WO | 2009069067 | A2 | 04-06-2009 |
| WO 2009082179 | A2 | | 02-07-2009 | KR | 20090071301 | A | 01-07-2009 |
| | | | | US | 2010309996 | A1 | 09-12-2010 |
| | | | | WO | 2009082179 | A2 | 02-07-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61245339

- US 61100118